# FASCICULE DE BREVET EUROPEEN

(11) **EP 3 526 960 B1**
(45) Date de publication et mention de la délivrance du brevet: **08.07.2020**
(21) Numéro de dépôt: 17768099.8
(22) Date de dépôt: 13.09.2017
(51) Int. Cl.: H04M 3/38, H04L 29/06, H04W 12/06, H04M 3/42

(54) **PROCÉDÉ DE VÉRIFICATION DE LA VALIDITÉ D'UNE LIGNE TÉLÉPHONIQUE D'UN UTILISATEUR D'UN SERVICE OU D'UNE APPLICATION LOGICIELLE**
VERFAHREN ZUR ÜBERPRÜFUNG DER GÜLTIGKEIT EINER TELEFONLEITUNG EINES NUTZERS EINES DIENSTES ODER EINER SOFTWARE-ANWENDUNG
METHOD FOR VERIFYING THE VALIDITY OF A TELEPHONE LINE OF A USER OF A SERVICE OR OF A SOFTWARE APPLICATION

(30) Priorité: 16.10.2016 FR 1660004
(43) Date de publication de la demande: 21.08.2019
(73) Titulaire: Onoff Telecom, 75010 Paris (FR)
(72) Inventeur: KHRIS, Taïg, 75010 PARIS (FR)
(74) Mandataire: Argyma
(86) Numéro de dépôt international: PCT/EP2017/073053
(87) Numéro de publication internationale: WO 2018/068978

(56) Documents cités:
- EP-A1- 3 043 580
- CN-A- 104 661 210
- KR-A- 20130 113 769

## Description

### DOMAINE TECHNIQUE ET OBJET DE L'INVENTION

De façon générale, l'invention concerne l'authentification d'une ligne téléphonique d'un utilisateur d'un service ou d'une application logicielle. Plus précisément, la présente invention vise un procédé permettant d'identifier le numéro de ligne téléphonique associé à une carte SIM intégrée à un terminal de communication d'un utilisateur d'un service ou d'une application logicielle. Le procédé selon l'invention permet ainsi de vérifier qu'un utilisateur souhaitant s'enregistrer sur un serveur, en vue de l'utilisation d'un service ou d'une application logicielle, en particulier mis en œuvre par un terminal de communication portable, tel qu'un smartphone, est bien titulaire d'une ligne téléphonique valide, et d'identifier le numéro de ladite ligne téléphonique liée à une carte SIM valide présente dans son smartphone, qu'il s'agisse d'une carte SIM physique (« hard SIM » en anglais) ou logicielle (« soft SIM » en anglais).

Il est précisé que, comme cela est connu de l'homme du métier, une carte SIM, SIM étant un acronyme pour « Subscriber Identify Module », signifiant « module d'identification de l'abonné », est une puce comprenant un microcontrôleur et une mémoire et constituant une carte d'abonné à un service de téléphonie mobile, ladite carte étant intégrée à un terminal de communication portable, tel qu'un smartphone.

Le procédé selon l'invention permet par conséquent l'authentification d'un tel utilisateur souhaitant utiliser un tel service ou une telle application logicielle au moyen d'un terminal de communication portable, ledit terminal de communication étant apte à participer à une liaison téléphonique sur un réseau de communication téléphonique, par exemple de type GSM (pour « Global System for Mobile Communication » selon l'acronyme anglais signifiant « système global de communication mobile », technologie également désignée sous l'appellation 2G), UMTS (pour « Universal Mobile Télécommunications System » selon l'acronyme anglais signifiant « système de télécommunications mobile universel », technologie également désignée sous l'appellation 3G), LTE (pour « Long Term Evolution » selon l'acronyme anglais signifiant « évolution à long terme », technologie également désignée sous l'appellation 4G) ou CDMA (pour « Code Division Multiple Access » selon l'acronyme anglais signifiant « accès multiple par répartition en code »).

Ledit terminal de communication est par ailleurs apte à établir une liaison sur un réseau de communication de données.

Lorsqu'un tel utilisateur souhaite exécuter un service ou une application logicielle sur son terminal de communication portable, l'éditeur ou le fournisseur dudit service ou de ladite application logicielle entend pouvoir authentifier ledit utilisateur, en particulier en vérifiant la validité de la ligne téléphonique, c'est-à-dire de la carte SIM, associée audit terminal de communication portable.

### ETAT DE LA TECHNIQUE

Comme cela est connu, de nombreux fournisseurs de services et éditeurs d'applications logicielles pour smartphones authentifient les utilisateurs de leurs services et applications logicielles au moyen de la vérification de la validité de leurs lignes téléphoniques.

A cette fin, une technique répandue consiste, pour le fournisseur d'un service ou l'éditeur d'une application logicielle, à émettre un message court de type SMS (pour « Short Message Service » en anglais, signifiant « service de message court »), via un serveur, à destination d'un numéro de ligne téléphonique renseigné par l'utilisateur.

En outre, le document KR 2013 0113769 A décrit un système d'authentification utilisant un téléphone mobile et un procédé associé permettant d'accroître l'intégrité de l'authentification de l'utilisateur via un service d'authentification utilisant une connexion simultanée d'un serveur d'authentification et d'un serveur d'un opérateur de communication mobile.

Selon la technique actuellement répandue, le message court est reçu sur le terminal de communication portable de l'utilisateur si ce dernier a correctement renseigné le numéro de la ligne téléphonique correspondant à la carte SIM intégrée à son terminal de communication portable. Le message court comprend généralement un code de vérification alphanumérique et/ou numérique présentant une durée de validité limitée, ledit code de vérification devant être copié sur une interface, du type interface web, connectée au serveur, pour que le fournisseur du service ou l'éditeur de l'application logicielle puisse vérifier que l'utilisateur a bien reçu le message court, et donc que le numéro de ligne téléphonique qu'il a renseigné est valide.

Cette technique est largement répandue et est mise en œuvre par de nombreux fournisseurs de services et éditeurs d'applications logicielles, notamment à large échelle.

Or, cette technique connue comprend des inconvénients, en particulier un coût non négligeable, attaché au coût d'envoi des messages courts, et un risque d'interception des messages courts envoyés, permettant à des tiers de s'identifier indûment.

De plus, le coût correspondant à l'envoi d'un message court pour chaque validation, s'il peut déjà s'avérer important, in fine, lorsque le volume d'utilisateurs est élevé, peut encore être démultiplié lorsque, pour des raisons d'encombrement des réseaux de téléphonie, le message court envoyé n'est pas reçu, ou du moins n'est pas reçu immédiatement, par l'utilisateur, de sorte que celui-ci réédite la manipulation, généralement un simple clic sur un bouton de validation, génératrice du message court, démultipliant les coûts d'acheminement dudit message court.

De plus, l'acheminement de messages courts n'est pas sécurisé, et les messages courts envoyés par le serveur peuvent être interceptés et exploités par des personnes tierces, indépendantes de l'utilisateur.

Pour pallier ces inconvénients, la présente invention propose un procédé de vérification de la validité d'une ligne téléphonique associée à un terminal de communication au moyen duquel un utilisateur souhaite s'enregistrer pour utiliser un service ou une application logicielle.

Le procédé selon l'invention ne nécessite pas l'envoi de messages courts par le fournisseur du service ou l'éditeur de l'application logicielle. Par ailleurs, elle permet une validation sûre de la ligne téléphonique mise en œuvre par l'utilisateur.

A cette fin, le procédé selon l'invention propose l'allocation d'un numéro d'appel temporaire de validation associé à une procédure de validation impliquant l'utilisateur et le service ou l'application logicielle pour lequel (laquelle) ledit utilisateur souhaite s'enregistrer, au moyen d'un système de validation dédié disposant d'une pluralité de numéros temporaires disponibles. L'association entre le numéro d'appel temporaire de validation et la procédure de validation, ladite procédure de validation étant intrinsèquement liée à l'utilisateur et au service ou à l'application logicielle considérés, est par définition valide pour une durée limitée.

Le procédé prévoit de provoquer l'émission d'un appel par le terminal de communication de l'utilisateur à destination dudit numéro d'appel temporaire de validation qui a été attribué à la procédure de validation. Cet appel, notifié au système de validation dédié, permet la validation de la ligne téléphonique appelante, correspondant à celle de l'utilisateur à authentifier.

### PRESENTATION GENERALE DE L'INVENTION

Plus précisément, l'invention vise un procédé de vérification de la validité d'une ligne téléphonique d'un utilisateur susceptible d'utiliser un service ou une application logicielle, en vue de permettre audit utilisateur d'utiliser un service ou une application logicielle, au moyen d'un terminal de communication de l'utilisateur associé à ladite ligne téléphonique, le procédé comprenant les étapes suivantes :
- l'initiation, par un système client associé au service ou à l'application logicielle, d'une procédure de validation de l'utilisateur susceptible d'utiliser le service ou l'application logicielle, ladite procédure de validation étant associée à un identifiant dudit utilisateur et audit service ou à ladite application logicielle,
- l'allocation à ladite procédure de validation, par un système de validation, d'un numéro d'appel temporaire de validation présentant une durée de validité prédéterminée,
- la génération d'un appel par le terminal de communication de l'utilisateur, via un réseau de communication téléphonique, à destination du numéro d'appel temporaire de validation,
- la réception de l'appel par un serveur d'appel,
- la transmission de l'appel reçu par le serveur d'appel au système de validation,
- la notification par le système de validation au système client, le cas échéant, de l'appel reçu à destination du numéro d'appel temporaire de validation, pendant la durée de validité prédéfinie dudit numéro d'appel temporaire de validation,
- la vérification de la correspondance entre le numéro d'appel temporaire de validation appelé et la procédure de validation, pour s'assurer que le terminal de communication de l'utilisateur a émis l'appel à destination du numéro d'appel temporaire de validation, pendant la durée de validité prédéterminée dudit numéro d'appel temporaire de validation, et
- la validation de la ligne téléphonique de l'utilisateur dans la mesure où la correspondance entre le numéro d'appel temporaire de validation appelé par le terminal de communication de l'utilisateur et la procédure de validation a été vérifiée à l'étape précédente, de sorte que le système client est apte à autoriser l'utilisateur à utiliser le service ou l'application logicielle.

Grâce au procédé selon l'invention, le fournisseur du service ou l'éditeur de l'application logicielle réalise des économies dans la mesure où il n'a pas à envoyer des messages courts à chacun des utilisateurs souhaitant s'authentifier.

De plus, la sécurité de l'authentification est renforcée étant donné que l'appel permettant la validation de la ligne téléphonique provient du terminal de communication de l'utilisateur, empêchant de fait toute interception de codes de validations envoyés par messages courts.

En outre, l' « expérience utilisateur » est améliorée, d'abord parce que la procédure de validation est plus rapide et ne risque pas de donner l'impression de ne pas fonctionner, comme lorsque le message court contenant un code de vérification ne parvient pas à l'utilisateur, pour cause de dysfonctionnement du réseau de téléphonie par exemple, et ensuite parce qu'il n'est pas obligatoire de saisir manuellement son numéro de ligne téléphonique

Selon un mode de réalisation, l'étape de vérification de la correspondance entre le numéro d'appel temporaire de validation appelé et la procédure de validation est réalisée par le système client.

Selon un autre mode de réalisation, l'étape de vérification de la correspondance entre le numéro d'appel temporaire de validation appelé et la procédure de validation est réalisée par le système de validation.

Selon un mode de réalisation, le système de validation acquiert, via le serveur d'appel, un numéro de ligne téléphonique à l'origine de l'appel à destination du numéro d'appel temporaire de validation, ledit numéro de ligne téléphonique étant associé à une carte d'abonné à un service téléphonique mobile intégrée au terminal de communication appelant, et ledit système de validation notifie ledit numéro de ligne téléphonique au système client.

Selon un mode de réalisation particulier, l'utilisateur saisit par ailleurs son numéro de ligne téléphonique sur une interface du système client et ledit système client vérifie que l'appel à destination du numéro d'appel temporaire de validation provient bien dudit numéro de ligne téléphonique saisi par l'utilisateur sur l'interface du système client.

Avantageusement, selon un mode de réalisation, si aucun appel à destination du numéro d'appel temporaire de validation n'est reçu pendant la durée de validité prédéfinie dudit numéro d'appel temporaire de validation, le système de validation notifie au système client un échec de la procédure de validation, de sorte que ledit système client est apte à ne pas autoriser l'utilisateur à utiliser le service ou l'application logicielle.

### DESCRIPTION DES FIGURES

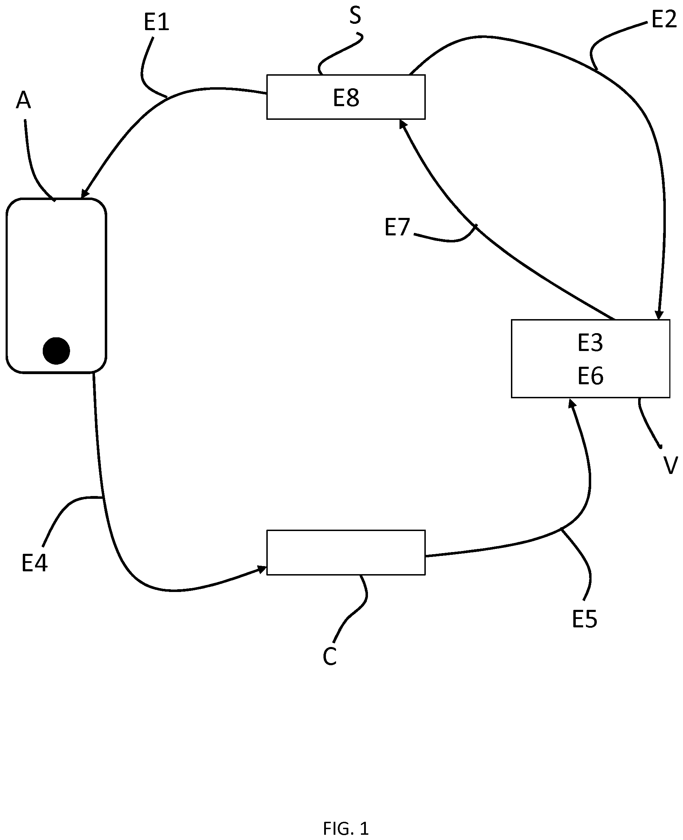

L'invention sera mieux comprise à la lecture de la description qui va suivre, donnée uniquement à titre d'exemple, et se référant à la figure 1 annexée qui représente le schéma bloc fonctionnel du procédé selon l'invention.

### DESCRIPTION DETAILLEE DE L'INVENTION

Il est rappelé que la présente invention est décrite ci-après à l'aide de différents modes de réalisation non limitatifs et est susceptible d'être mise en œuvre dans des variantes à la portée de l'homme du métier, également visées par la présente invention.

Dans la suite de la description, on entend par « terminal de communication » tout dispositif électronique, notamment tout téléphone portable de type « smartphone », doté de moyens de calcul et de moyens de stockage de données et apte à transmettre et à recevoir des données via un réseau de communication téléphonique et ou de données.

Sur la figure 1, le terminal de communication A est ainsi, en particulier, un smartphone connecté à un réseau de communication téléphonique et à un réseau de communication de données.

Il est rappelé qu'un réseau de communication téléphonique consiste en une infrastructure de communication privée ou étendue permettant la connexion d'une pluralité d'équipements de communication tels que des serveurs, des commutateurs, des bases de données et des terminaux de communication. De manière connue, l'infrastructure de communication d'un réseau de communication téléphonique forme un réseau sans fil et/ou filaire. En particulier, dans le contexte de l'invention, le réseau de communication téléphonique est de type GSM, CDMA, UMTS ou LTE.

Il est également rappelé qu'un réseau de communication de données consiste en une infrastructure de communication privée ou étendue permettant la connexion d'une pluralité d'équipements de communication, tels que des serveurs, des commutateurs, des bases de données ou des terminaux de communication par exemple. De manière connue, l'infrastructure de communication d'un réseau de communication de données forme un réseau sans fil et/ou filaire. Dans le contexte de l'invention, le réseau de communication de données est notamment un réseau conforme au protocole IP.

En référence à la figure 1, il est représenté un terminal de communication A cherchant à s'enregistrer sur une interface web connectée à un système client S, en vue de s'authentifier pour pouvoir accéder par exemple à des services ou utiliser une application logicielle.

Pour authentifier l'utilisateur, le système client S a besoin de vérifier la validité de la ligne téléphonique associé au terminal de communication A mis en œuvre par l'utilisateur.

Selon l'invention, le procédé de validation de la ligne téléphonique de l'utilisateur se déroule conformément à la séquence suivante.

Lorsqu'un système client S initie une procédure de validation de la ligne téléphonique d'un client - utilisateur postulant à l'utilisation d'un service ou d'une application logicielle via son terminal de communication A, l'utilisateur, via son terminal de communication A (étape E1), et un système de validation V (étape E2) en sont informés.

Le système de validation V dispose d'une base de données comportant une pluralité de numéros de lignes téléphoniques disponibles. Le système de validation V attribue un numéro d'appel temporaire de validation à la procédure de validation initiée par le système client S (étape E3), pour permettre l'authentification de l'utilisateur en vue de l'utilisation du service ou de l'application logicielle considéré.

Le numéro d'appel temporaire de validation est alloué pour une durée prédéfinie, dans le but précis de valider la ligne téléphonique de l'utilisateur, pour le service ou l'application considéré. Ladite durée prédéfinie est typiquement de l'ordre de 15 secondes.

Dès lors, le numéro d'appel temporaire de validation à joindre est notifié au terminal de communication A de l'utilisateur, typiquement via une notification émise par le système client S, et ledit terminal de communication A émet un appel, via un réseau de communication téléphonique, vers ce numéro d'appel temporaire de validation (étape E4). Selon un mode de réalisation, ledit appel est émis en tâche de fond, tandis que l'utilisateur reste connecté sur une page de l'interface web du système client par exemple, affichant typiquement un message invitant à la patience durant la procédure de validation. Alternativement, l'appel vers le numéro d'appel temporaire de validation est réalisé en tâche principale, au premier plan, sur le terminal de communication A de l'utilisateur.

L'appel émis vers le numéro d'appel temporaire de validation par le terminal de communication A de l'utilisateur transite, comme cela est connu, par un serveur d'appel C qui notifie l'appel à son destinataire (étape E5), à savoir le système de validation V.

S'il est notifié d'un appel entrant à destination du numéro d'appel temporaire de validation (étape E6), pendant la durée de validité prédéfinie dudit numéro d'appel temporaire de validation, à compter de l'instant où il l'a alloué, le système de validation V notifie au système client S (étape E7) avoir reçu un tel appel sur le numéro d'appel temporaire de validation qu'il a alloué à la procédure de validation.

Selon l'invention, la bonne correspondance du numéro d'appel temporaire de validation appelé avec la procédure de validation concernée, c'est-à-dire avec l'utilisateur et le service ou l'application logicielle visé, est vérifiée.

En pratique, le système de validation V est apte à vérifier la bonne correspondance entre le numéro d'appel temporaire de validation appelé et la procédure de validation considérée, initiée par le système client S.

Selon un mode de réalisation principal, le système client S valide, à partir de cette information relative à la bonne correspondance entre le numéro d'appel temporaire de validation appelé et la procédure de validation considérée, la ligne téléphonique de l'utilisateur et l'autorise par conséquent à utiliser le service ou l'application logicielle.

Selon un mode de réalisation préféré, le système de validation V acquiert, via le serveur d'appel C, le numéro de la ligne téléphonique appelant le numéro d'appel temporaire de validation, ledit numéro de ligne téléphonique étant associé à la carte SIM intégrée au terminal de communication A, et ledit système de validation V notifie ce numéro de ligne téléphonique de l'appelant au système client S (à l'étape E7).

Dans ce cas, selon un mode de réalisation particulier, l'utilisateur est en outre préalablement invité à renseigner son numéro de ligne téléphonique, permettant au système client S de consolider la validation de la ligne téléphonique dudit utilisateur en comparant le numéro de ligne téléphonique fournie par l'utilisateur et le numéro de ligne téléphonique de l'appelant fourni par le système de validation.

Il est à noter que l'appel à destination du numéro d'appel temporaire de validation est émis, par le terminal de communication A, via un réseau de communication téléphonique, tandis que ledit terminal de communication A peut être connecté au système client S via un réseau de communication de données.

## Revendications

1. Procédé de vérification de la validité d'une ligne téléphonique d'un utilisateur susceptible d'utiliser un service ou une application logicielle, en vue de permettre audit utilisateur d'utiliser un service ou une application logicielle, au moyen d'un terminal de communication (A) de l'utilisateur associé à ladite ligne téléphonique, le procédé comprenant :
- l'initiation (E1, E2), par un système client associé au service ou à l'application logicielle, d'une procédure de validation de l'utilisateur susceptible d'utiliser le service ou l'application logicielle, ladite procédure de validation étant associée à un identifiant dudit utilisateur et audit service ou à ladite application logicielle,
ledit procédé étant **caractérisé en ce qu'**il comprend par ailleurs les étapes suivantes :
- l'allocation (E3) à ladite procédure de validation, par un système de validation (V), d'un numéro d'appel temporaire de validation présentant une durée de validité prédéterminée,
- la génération d'un appel par le terminal de communication (A) de l'utilisateur, via un réseau de communication téléphonique, à destination du numéro d'appel temporaire de validation,
- la réception de l'appel par un serveur d'appel (C),
- la transmission de l'appel reçu par le serveur d'appel (C) au système de validation (V),
- la notification par le système de validation (V) au système client (S), le cas échéant, de l'appel reçu à destination du numéro d'appel temporaire de validation, pendant la durée de validité prédéfinie dudit numéro d'appel temporaire de validation,
- la vérification de la correspondance entre le numéro d'appel temporaire de validation appelé et la procédure de validation, pour s'assurer que le terminal de communication (A) de l'utilisateur a émis l'appel à destination du numéro d'appel temporaire de validation, pendant la durée de validité prédéterminée dudit numéro d'appel temporaire de validation, et
- la validation de la ligne téléphonique de l'utilisateur dans la mesure où la correspondance entre le numéro d'appel temporaire de validation appelé par le terminal de communication (A) de l'utilisateur et la procédure de validation a été vérifiée à l'étape précédente, de sorte que le système client (S) est apte à autoriser l'utilisateur à utiliser le service ou l'application logicielle.

2. Procédé selon la revendication 1, dans lequel l'étape de vérification de la correspondance entre le numéro d'appel temporaire de validation appelé et la procédure de validation est réalisée par le système client (S).

3. Procédé selon la revendication 1, dans lequel l'étape de vérification de la correspondance entre le numéro d'appel temporaire de validation appelé et la procédure de validation est réalisée par le système de validation (V).

4. Procédé selon l'une des revendications précédentes, dans lequel le système de validation (V) acquiert, via le serveur d'appel (C), un numéro de ligne téléphonique à l'origine de l'appel à destination du numéro d'appel temporaire de validation, ledit numéro de ligne téléphonique étant associé à une carte d'abonné à un service de téléphonie mobile intégrée au terminal de communication (A) appelant, et ledit système de validation (V) notifie ledit numéro de ligne téléphonique au système client (S).

5. Procédé selon la revendication précédente, dans lequel l'utilisateur saisit son numéro de ligne téléphonique sur une interface du système client (S) et ledit système client (S) vérifie que l'appel à destination du numéro d'appel temporaire de validation provient bien dudit numéro de ligne téléphonique saisi par l'utilisateur sur l'interface du système client (S).

6. Procédé selon l'une des revendications précédentes, dans lequel, si aucun appel à destination du numéro d'appel temporaire de validation n'est reçu pendant la durée de validité prédéfinie dudit numéro d'appel temporaire de validation, le système de validation (V) notifie au système client (S) un échec de la procédure de validation, de sorte que ledit système client (S) est apte à ne pas autoriser l'utilisateur à utiliser le service ou l'application logicielle.

## Patentansprüche

1. Verfahren zur Überprüfung der Gültigkeit einer Telefonleitung eines Nutzers, der imstande ist, einen Dienst oder eine Softwareanwendung zu nutzen, um dem Nutzer zu ermöglichen, mittels eines Kommunikations-Endgeräts (A) des Nutzers, das der Telefonleitung zugeordnet ist, einen Dienst oder eine Softwareanwendung zu nutzen, wobei das Verfahren umfasst:
- Einleiten (E1, E2), durch ein dem Dienst oder der Softwareanwendung zugeordnetes Client-System, eines Validierungsprozesss des Nutzers, der imstande ist, den Dienst oder die Softwareanwendung zu nutzen, wobei der Validierungsprozess einem Kennwort des Nutzers und dem Dienst oder der Softwareanwendung zugeordnet ist,
wobei das Verfahren **dadurch gekennzeichnet ist, dass** es ferner die folgenden Schritte umfasst:
- Bereitstellen (E3), für den Validierungsprozess, durch ein Validierungssystem (V), einer temporären Validierungsrufnummer, die eine zuvor bestimmten Gültigkeitsdauer aufweist,
- Erzeugen eines Anrufs durch das Kommunikations-Endgerät (A) des Nutzers über ein Telefonkommunikationsnetz in Richtung der temporären Validierungsrufnummer,
- Empfangen des Anrufs durch einen Call-Server (C),
- Übertragen des von dem Call-Server (C) empfangenen Anrufs an das Validierungssystem (V),
- Anzeigen, dem Client-System (S) durch das Validierungssystem (V), im Bedarfsfall, des in Richtung der temporären Validierungsrufnummer während der zuvor festgelegten Gültigkeitsdauer der temporären Validierungsrufnummer empfangenen Anrufs,
- Überprüfen der Übereinstimmung zwischen der angerufenen temporären Validierungsrufnummer und dem Validierungsprozess, um sich zu vergewissern, dass das Kommunikations-Endgerät (A) des Nutzers den Anruf in Richtung der temporären Validierungsrufnummer während der zuvor bestimmten Gültigkeitsdauer der temporären Validierungsrufnummer gesendet hat, und
- Validieren der Telefonleitung des Nutzers, sofern die Übereinstimmung zwischen der von dem Kommunikations-Endgerät (A) des Nutzers angerufenen temporären Validierungsrufnummer und dem Validierungsprozess im vorangegangenen Schritt überprüft wurde, so dass das Client-System (S) in der Lage ist, dem Nutzer zu gestatten, den Dienst oder die Softwareanwendung zu verwenden.

2. Verfahren nach Anspruch 1, wobei der Schritt des Überprüfens der Übereinstimmung zwischen der angerufenen temporären Validierungsrufnummer und dem Validierungsprozess vom Client-System (S) durchgeführt wird.

3. Verfahren nach Anspruch 1, wobei der Schritt des Überprüfens der Übereinstimmung zwischen der angerufenen temporären Validierungsrufnummer und dem Validierungsprozess vom Validierungssystem (V) durchgeführt wird.

4. Verfahren nach einem der vorangehenden Ansprüche, wobei das Validierungssystem (V) über den Call-Server (C) eine Telefonleitungsnummer erwirbt, die Ursprung des Anrufs in Richtung der temporären Validierungsrufnummer ist, wobei die Telefonleitungsnummer einer Abonnentenkarte eines Mobiltelefondiensts zugeordnet ist, die in das anrufende Kommunikations-Endgerät (A) integriert ist und das Validierungssystem (V) die Telefonleitungsnummer dem Client-System (S) anzeigt.

5. Verfahren nach vorangehendem Anspruch, wobei der Nutzer seine Telefonleitungsnummer auf einer Schnittstelle des Client-Systems (S) eingibt und das Client-System (S) überprüft, dass der Anruf in Richtung der temporären Validierungsrufnummer wirklich von der Telefonleitungsnummer kommt, die von dem Nutzer auf der Schnittstelle des Client-Systems (S) eingegeben wurde.

6. Verfahren nach einem der vorangehenden Ansprüche, wobei, wenn kein Anruf in Richtung der temporären Validierungsrufnummer während der zuvor festgelegten Gültigkeitsdauer der temporären Validierungsrufnummer empfangen wird, das Validierungssystem (V) dem Client-System (S) ein Scheitern des Validierungsprozesses anzeigt, so dass das Client-System (S) imstande ist, dem Nutzer die Verwendung des Diensts oder der Softwareanwendung nicht zu gestatten.

## Claims

1. Method for verifying the validity of a telephone line of a user likely to use a service or a software application, with the purpose of authorising said user to use a service or a software application, by means of a communication terminal (A) of the user associated with said telephone line, the method comprising:
- the initiation (E1, E2), by a client system associated with the service or with the software application, of a validation procedure of the user likely to use the service or the software application, said validation procedure being associated with an ID of said user and with said service or with said software application,
the method being **characterised in that** it furthermore comprises the following steps:
- the allocation (E3) to said validation procedure, by a validation system (V), of a temporary validation telephone number having a predetermined validity duration,
- the generation of a call by the communication terminal (A) of the user, via a telephone communication network, to the temporary validation telephone number,
- the reception of the call by a call server (C),
- the transmission of the call received by the call server (C) to the validation system (V),
- the notification by the validation system (V) to the client system (S), where applicable, of the call received intended for the temporary validation telephone number, during the predetermined validity duration of said temporary validation telephone number,
- the verification of the correspondence between the temporary validation telephone number called and the validation procedure, to ensure that the communication terminal (A) of the user emitted the call intended for the temporary validation telephone number, during the predetermined validity duration of said temporary validation telephone number, and
- the validation of the telephone line of the user insofar as the correspondence between the temporary validation telephone number called by the communication terminal (A) of the user and the validation procedure has been verified in the preceding step, such that the client system (S) is able to authorise the user to use the service or software application.

2. Method according to claim 1, wherein the step of verifying the correspondence between the temporary validation telephone number called and the validation procedure is carried out by the client system (S).

3. Method according to claim 1, wherein the step of verifying the correspondence between the temporary validation telephone number called and the validation procedure is carried out by the validation system (V).

4. Method according to one of the preceding claims, wherein the validation system (V) acquires, via the call server (C), a number of a telephone line at the origin of the call intended for the temporary validation telephone number, said number of a telephone line being associated with a subscriber card to a mobile telephone service integrated into the caller communication terminal (A), and said validation system (V) notifies said number of a telephone line to the client system (S).

5. Method according to the preceding claim, wherein the user enters their telephone line number on an interface of the client system (S) and said client system (S) verifies that the call intended for the temporary validation telephone number is indeed coming from said telephone line number entered by the user on the interface of the client system (S).

6. Method according to one of the preceding claims, wherein, if no call intended for the temporary validation telephone number is received during the predetermined validity duration of said temporary validation telephone number, the validation system (V) notifies to the client system (S) a failure of the validation procedure, such that said client system (S) is capable of not authorising the user to use the service or the software application.
